# FASCICULE DE BREVET EUROPEEN

(11) **EP 2 750 968 B1**
(45) Date de publication et mention de la délivrance du brevet: **08.06.2016**
(21) Numéro de dépôt: 12750363.9
(22) Date de dépôt: 20.08.2012
(51) Int. Cl.: B64C 25/32

(54) **DEFLECTEUR ANTI-PROJECTIONS POUR ATTERRISSEUR D'AERONEF**
SCHMUTZABWEISER FÜR FLUGZEUGFAHRWERK
DEBRIS DEFLECTOR FOR AIRCRAFT LANDING GEAR

(30) Priorité: 02.09.2011 FR 1157775
(43) Date de publication de la demande: 09.07.2014
(73) Titulaire: Messier-Bugatti-Dowty, 78140 Vélizy-Villacoublay (FR)
(72) Inventeur: DUCOS, Dominique, F-78140 Velizy-Villacoublay (FR)
(74) Mandataire: Parzy, Benjamin Alain
(86) Numéro de dépôt international: PCT/EP2012/066206
(87) Numéro de publication internationale: WO 2013/030030

(56) Documents cités:
- WO-A1-2010/052447
- US-A- 3 010 682
- US-A- 3 670 996
- US-A- 4 408 736
- US-A1- 2009 206 199

## Description

L'invention est relative à un déflecteur anti-projections pour atterrisseur d'aéronef, ainsi qu'un atterrisseur équipé d'un tel déflecteur.

### ARRIERE-PLAN TECHNOLOGIQUE DE L'INVENTION

Certains atterrisseurs sont équipés d'un déflecteur pour éviter les projections de cailloux ou débris par les pneumatiques lors de roulage de l'aéronef.

Un tel déflecteur est connu de US 4 408 736, qui est regardé comme l'art antérieur le plus proche.

De tels déflecteurs sont notamment couramment montés sur les atterrisseurs auxiliaires des chasseurs russes tels que le MIG 23 ou le MIG 29 qui portent deux roues sur un essieu commun. Les déflecteurs prennent alors la forme d'un volet s'étendant derrière les pneumatiques de l'atterrisseur et monté pivotant autour d'un axe confondu avec celui de l'essieu, le déflecteur étant par ailleurs relié par une tringle à un point fixe du caisson de l'atterrisseur. Ainsi, plus l'amortisseur de l'atterrisseur est enfoncé (ce qui correspond à une charge statique importante sur l'atterrisseur et donc à un risque accru de projection de cailloux), et plus le volet du déflecteur s'approche du sol.

Cependant, une garde doit nécessairement être maintenue entre le sol et le bas du volet pour éviter que celui-ci ne racle le sol et ne soit endommagé, voire empêche une marche arrière de l'aéronef (par exemple sous la poussée d'un tracteur). La prise en compte d'un éventuel sous-gonflage du pneumatique conduit à prendre des gardes importantes qui laissent subsister un jour important entre le sol et le bas du volet, diminuant ainsi l'efficacité du déflecteur.

### OBJET DE L'INVENTION

L'invention a pour objet un déflecteur anti-projections pour atterrisseur d'aéronef d'efficacité améliorée.

### BREVE PRESENTATION DE L'INVENTION

En vue de la réalisation de ce but, on propose un déflecteur anti-projections pour atterrisseur portant deux roues sur un essieu, comportant :
- un support fixe destiné à être fixé en service sur une partie de l'atterrisseur portant l'essieu pour s'étendre entre les roues et présenter une extrémité distale en arrière des roues ;
- un premier volet articulé sur le support au niveau de son extrémité distale selon un premier axe d'articulation sensiblement parallèle à l'essieu ;
- un deuxième volet articulé sur le premier volet selon un deuxième axe d'articulation sensiblement parallèle au premier axe d'articulation ;
- un organe de rappel disposé de sorte à rappeler le deuxième volet contre une butée du premier volet empêchant le deuxième volet de s'aligner avec le premier volet, et à rappeler le premier volet contre une butée du support fixe empêchant le premier volet de se replier contre le support.

Selon un mode de réalisation préféré, l'organe de rappel comporte un ressort attelé entre le deuxième volet et un point fixe du support ou de l'atterrisseur, le ressort s'étendant selon une ligne d'action qui passe entre les axes d'articulation.

### BREVE DESCRIPTION DES FIGURES

L'invention sera mieux comprise à la lumière de la description qui suit d'un mode particulier de réalisation non limitatif de déflecteur de l'invention, en référence aux figures des dessins annexés parmi lesquels :
- la figure 1 est une vue en perspective d'un atterrisseur auxiliaire d'aéronef équipé d'un déflecteur selon l'invention, une roue ayant été omise pour la clarté de la figure ;
- la figure 2 est une vue en perspective de l'arrière de l'atterrisseur illustré à la figure 1.
- La figure 3 est une vue de côté du déflecteur équipant l'atterrisseur des figures 1 et 2 ;
- Les figures 4 à 9 sont des vues de côtés de l'atterrisseur des figures 1 et 2 dans diverses situations de l'aéronef au sol.

### DESCRIPTION DETAILLEE D'UN MODE DE REALISATION DE L'INVENTION

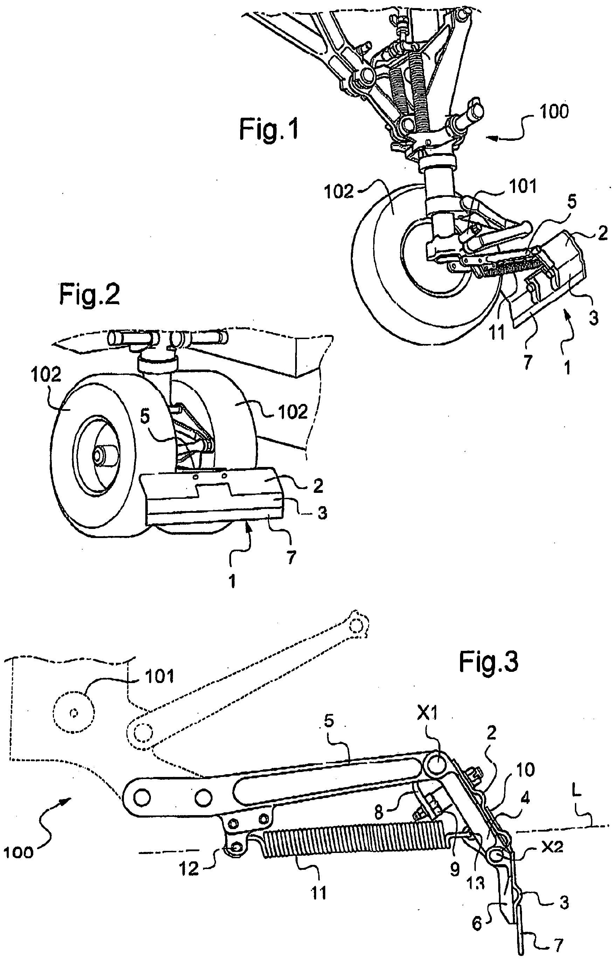

En référence aux figures 1 et 2, le déflecteur 1 de l'invention est représenté en position sur un atterrisseur auxiliaire 100 comportant un essieu 101 portant deux roues 102 munies de pneumatiques. Le déflecteur 1 comporte un volet 2 qui s'étend derrière les roues, le premier volet 2 étant prolongé vers le bas par un deuxième volet 3 muni d'une bavette 7.

Comme cela est particulièrement visible à la figure 3, le premier volet 2 comporte un châssis 4 qui est articulé selon un premier axe d'articulation X1 sensiblement parallèle à l'essieu 101 à l'extrémité distale d'un support 5 dont l'extrémité proximale est fixée sur l'atterrisseur, entre les roues portées par celui-ci. Quant au deuxième volet 3, il comporte un châssis 6 qui est articulé sur le châssis 4 du premier volet 2 selon un deuxième axe d'articulation X2 sensiblement parallèle au premier axe d'articulation X1.

Le support 5 comporte une butée 8 contre laquelle un organe d'arrêt 9 (ici un doigt de longueur réglable) solidaire du châssis 4 vient en contact pour définir une position angulaire d'arrêt du premier volet 2 par rapport au support 5, de sorte que le premier volet 2 ne peut se replier contre le support 5. De même, le deuxième volet 3 comporte une extension 10 qui forme un organe d'arrêt venant en contact contre le dos du premier volet 2, qui forme ainsi une butée définissant une position angulaire d'arrêt du deuxième volet 3 par rapport au premier volet 2, de sorte que le deuxième volet 3 ne peut s'aligner avec le premier volet 2.

Un organe de rappel, en l'occurrence ici un ressort 11 est attelé entre un point fixe 12 solidaire du support 5 (il pourrait être solidaire directement de l'atterrisseur), et l'extrémité d'un levier 13 solidaire du châssis 6 du deuxième volet 3. Comme on le constate sur la figure, la ligne d'action L du ressort passe entre les axes d'articulation X1 et X2, de sorte que le ressort 11 rappelle simultanément le premier volet 2 contre la butée 8 du support 5, et l'extension 10 du deuxième volet 3 contre le dos du premier volet 2.

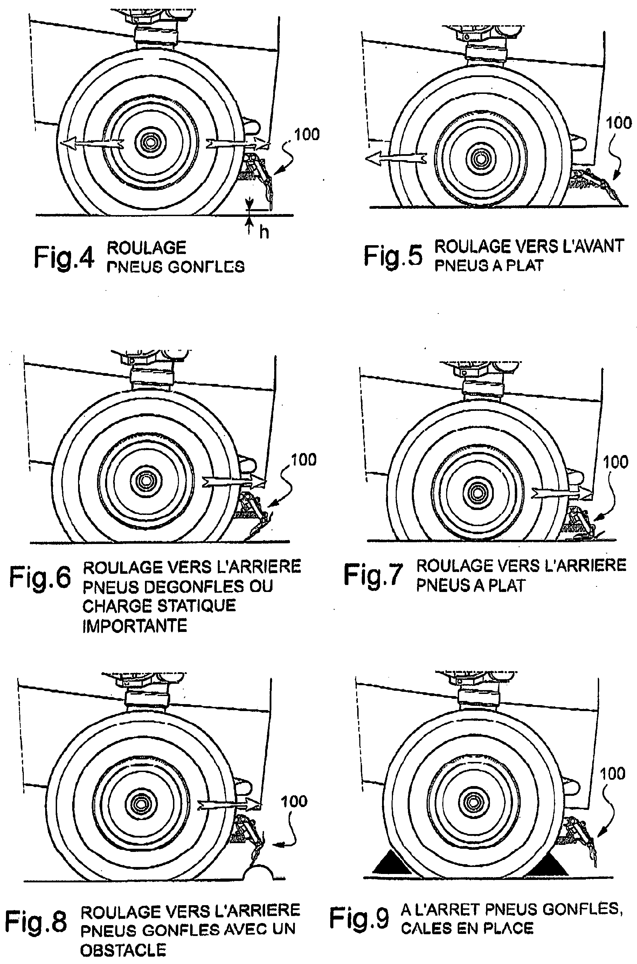

L'opération du déflecteur de l'invention est illustrée aux figures 4 à 9 dans différentes situations de manoeuvre au sol :

A la figure 4 est illustré le roulage (vers l'avant ou vers l'arrière) avec les pneumatiques correctement gonflés, pour une charge statique moyenne. On constate alors que l'extrémité de la bavette 7 est très proche du sol sans toutefois le toucher, avec une hauteur h de l'ordre de 20 millimètres, ce qui permet d'arrêter la plupart des projections.

A la figure 5 est illustrée une situation de roulage vers l'avant avec les pneumatiques entièrement dégonflés ou éclatés. On constate que la bavette 7 prend appui sur le sol, ce qui confirme le deuxième volet 3 en butée contre le premier volet 2 et provoque l'écartement du premier volet 2 par rapport au support 5 à l'encontre du ressort 11.

A la figure 6 est illustrée une situation de roulage vers l'arrière avec les pneumatiques entièrement dégonflés ou éclatés. On constate que la bavette 7 prend appui sur le sol, ce qui confirme le premier volet 2 en butée contre le support 5, et provoque le repliement du deuxième volet 3 par rapport au premier volet 2 à l'encontre du ressort 11.

A la figure 7 est illustrée une situation de roulage vers l'arrière avec les pneumatiques dégonflés. Le deuxième volet 3 est replié au point d'être presque parallèle au sol.

A la figure 8, est illustrée une situation de roulage vers l'arrière avec les pneumatiques correctement gonflés, la bavette butant contre un obstacle au sol. Dans ce cas, et comme illustré, le deuxième volet 3 se replie vers le premier volet 2 à l'encontre du ressort 11 pour s'effacer et ainsi passer l'obstacle. Au contraire, lors d'un roulage vers l'avant, c'est le premier volet 2 qui s'écarterait du support 5 à l'encontre du ressort 11.

A la figure 9 est illustrée une situation où l'aéronef est à l'arrêt, des cales ayant été placées contre les pneumatiques pour immobiliser l'aéronef. On constate qu'un espace suffisant s'étend entre les pneumatiques et le déflecteur pour y introduire une cale.

Bien entendu, l'invention n'est pas limitée à ce qui vient d'être décrit, mais englobe toute variante entrant dans le cadre défini par les revendications. En particulier, bien que l'organe de rappel comprend ici un ressort attelé entre le deuxième volet et un point fixe du support ou de l'atterrisseur, on pourra en variante utiliser un organe de rappel comportant deux ressorts de torsion disposés respectivement entre le support et le premier volet et entre le premier volet et le deuxième volet, chacun des ressorts de torsion rappelant le premier volet et le deuxième volet vers leurs butées respectives.

## Revendications

1. Déflecteur anti-projections pour atterrisseur portant deux roues sur un essieu, comportant :
- un support fixe (5) destiné à être fixé en service sur une partie de l'atterrisseur portant l'essieu pour s'étendre entre les roues et présenter une extrémité distale en arrière des roues ;
- un premier volet (2) articulé sur le support fixe (5) au niveau de son extrémité distale selon un premier axe d'articulation (X1) sensiblement parallèle à l'essieu ;
- un deuxième volet (3) articulé sur le premier volet selon un deuxième axe d'articulation (X2) sensiblement parallèle au premier axe d'articulation ;
- un organe de rappel (11) disposé de sorte à rappeler le deuxième volet (3) contre une butée du premier volet empêchant le deuxième volet de s'aligner avec le premier volet, et à rappeler le premier volet contre une butée (8) du support fixe (5) empêchant le premier volet (2) de se replier contre le support (5).

2. Déflecteur selon la revendication 1, dans lequel l'organe de rappel comporte un ressort (11) attelé entre le deuxième volet et un point fixe du support ou de l'atterrisseur, le ressort s'étendant selon une ligne d'action (L) qui passe entre les axes d'articulation (X1, X2).

3. Atterrisseur muni d'un déflecteur selon la revendication 1 ou la revendication 2.

## Patentansprüche

1. Schmutzabweiser für ein Flugzeugfahrwerk, das zwei Räder auf einer Radachse trägt, umfassend:
- einen ortsfesten Träger (5), der dazu bestimmt ist, im Betrieb an einem Teil des Fahrwerks befestigt zu werden, der die Radachse trägt, um sich zwischen den Rädern zu erstrecken und hinter den Rädern ein distales Ende aufzuweisen;
- eine erste Klappe (2), die an dem ortsfesten Träger (5) im Bereich seines distalen Endes um eine erste Gelenkverbindungsachse (X1), die im Wesentlichen parallel zur Radachse ist, angelenkt ist;
- eine zweite Klappe (3), die an der ersten Klappe um eine zweite Gelenkverbindungsachse (X2), die im Wesentlichen parallel zur ersten Gelenkverbindungsache ist, angelenkt ist;
- ein Rückstellorgan (11), das so angeordnet ist, dass es die zweite Klappe (3) gegen einen Anschlag der ersten Klappe rückstellt und dabei verhindert, dass sich die zweite Klappe mit der ersten Klappe ausrichtet, und dass es die erste Klappe gegen einen Anschlag (8) des ortsfesten Trägers (5) rückstellt und dabei verhindert, dass sich die erste Klappe (2) gegen den Träger (5) umklappt.

2. Abweiser nach Anspruch 1, wobei das Rückstellorgan eine Feder (11) umfasst, die zwischen der zweiten Klappe und einem ortsfesten Punkt des Trägers oder des Fahrwerks gekoppelt ist, wobei sich die Feder gemäß einer Wirkungslinie (L) erstreckt, die zwischen den Gelenkverbindungsachsen (X1, X2) verläuft.

3. Fahrwerk, das mit einem Abweiser nach Anspruch 1 oder Anspruch 2 ausgestattet ist.

## Claims

1. An anti-lofting deflector for landing gear having two wheels on an axle, the deflector comprising:
· a stationary support (5) for being fastened in service to a portion of the landing gear that carries the axle in order to extend between the wheels and present a distal end behind the wheels;
· a first flap (2) hinged to the stationary support (5) via its distal end about a first hinge axis (X1) substantially parallel to the axle;
· a second flap (3) hinged to the first flap about a second hinge axis (X2) substantially parallel to the first hinge axis; and
· a return member (11) arranged so as to urge the second flap (3) against an abutment of the first flap that prevents the second flap from becoming aligned with the first flap, and to urge the first flap against an abutment (8) of the stationary support (5) that prevents the first flap (2) from folding against the support (5).

2. A deflector according to claim 1, wherein the return member comprises a spring (11) coupled between the second flap and a stationary point of the support or of the landing gear, the spring extending along a line of action (L) that passes between the hinge axes (X1, X2).

3. Landing gear provided with a deflector according to claim 1 or claim 2.
